# EUROPÄISCHE PATENTSCHRIFT

(11) **EP 1 954 966 B1**
(45) Veröffentlichungstag und Bekanntmachung des Hinweises auf die Patenterteilung: **10.10.2018**
(21) Anmeldenummer: 06776552.9
(22) Anmeldetag: 02.08.2006
(51) Int. Cl.: F16J 1/08, F02F 3/00

(54) **KOLBEN MIT EINER UNTERHALB EINER RINGNUT ANGEORDNETEN UMLAUFENDEN RADIALEN VERTIEFUNG**
PISTON COMPRISING A CIRCUMFERENTIAL RADIAL RECESS LOCATED BELOW AN ANNULAR GROOVE
PISTON POURVU D'UN ÉVIDEMENT RADIAL PÉRIPHÉRIQUE PLACE EN DESSOUS D'UNE RAINURE ANNULAIRE

(30) Priorität: 03.09.2005 DE 102005041908
(43) Veröffentlichungstag der Anmeldung: 13.08.2008
(73) Patentinhaber: KS Kolbenschmidt GmbH, 74172 Neckarsulm (DE)
(72) Erfinder: BUSCHBECK, Ralf, 74861 Neudenau (DE); SPERMANN, Johannes, 74206 Bad Wimpfen (DE); HEFELE, Christina, 74254 Offenau (DE); BLAU, Alfred, Alexander, 74172 Neckarsulm (DE)
(74) Vertreter: Greif, Thomas
(86) Internationale Anmeldenummer: PCT/EP2006/007637
(87) Internationale Veröffentlichungsnummer: WO 2007/025622

(56) Entgegenhaltungen:
- EP-A2- 1 248 022
- GB-A- 2 268 244
- JP-A- 2001 050 107
- JP-A- 2002 013 441
- JP-A- 2005 188 303
- US-A- 4 470 375
- US-A1- 2004 237 775

## Beschreibung

Die Erfindung betrifft einen Kolben für eine Brennkraftmaschine gemäß den Merkmalen des Oberbegriffes des Patentanspruches 1.

Kolben für Brennkraftmaschinen mit einem Kolbenoberteil und einem daran angrenzenden Schaftteil sind grundsätzlich bekannt. Das Kolbenoberteil weist ein Ringfeld auf, das zumindest eine Ringnut, im Regelfall drei Ringnuten, umfasst, wobei in der zumindest einen Ringnut ein Ölabstreifring eingesetzt wird, der sich beim Betrieb des Kolbens an der Zylinderinnenwand der Brennkraftmaschine abstützt beziehungsweise an dieser entlanggleitet. Dieser Bereich des Kolbens und auch der Ölabstreifring sind während des Betriebes des Kolbens hoch belastet, so dass es bei nicht ausreichender Festigkeit aufgrund fehlerhafter Geometrien dort zu Beschädigungen kommen kann. Gleichzeitig ist es erforderlich und bekannt, unterhalb des Ölabstreifringes eine Vertiefung vorzusehen, um das angesammelte Öl abführen zu können.

Diese Vertiefung unterliegt jedoch besonderen konstruktiven Anforderungen, da bei fehlerhafter oder falscher Auslegung der Geometrie dieser Vertiefung eine Schwächung im Bereich zwischen der Oberkante des Schaftteiles und der Unterkante des Kolbenoberteiles zur Folge hat. Solche fehlerhafte Auslegungen in Form einer Fase oder eines Rezesses führen zu unzulässig kleinen, d.h. geringen Auflageflächen des Ölabstreifringes beziehungsweise zu kürzeren tragenden Schaftlängen, so dass dadurch der Kolben insgesamt geschwächt wird und damit nicht hoch belastbar ist.

Aus der US 2004/0237775 A1 ist ein Kolben bekannt, der ein Ringfeld mit drei übereinander angeordneten Ringnuten aufweist, wobei in jeweils einer Ringnut ein Kolbenring eingesetzt ist. Unterhalb des Ringfeldes und auch ausgehend von der untersten Ringnut sind nach innen gerichtete Kanäle vorhanden, mit denen das Öl, welches sich in der Ringnut bzw. einer darunter angeordneten Nut ansammelt, in den Innenbereich des Kolbens abgeführt werden kann.

Die JP 2002 013441 A offenbart einen Kolben mit einem Kolbenoberteil und einem daran angrenzenden Schaftteil, wobei das Kolbenoberteil ein Ringfeld mit zumindest einer Ringnut aufweist, wobei im Bereich zwischen der Oberkante des Schaftteiles und der Ringnut eine umlaufende radiale Vertiefung angeordnet ist und der obere Durchmesser der Vertiefung im Bereich der Unterkante der ersten Ringnut kleiner ist als der untere Durchmesser der Vertiefung im Bereich der Oberkante des Schaftteiles, wobei in dem Bereich des Überganges von dem Kolbenoberteil in das Schaftteil das Kolbenoberteil in einem Bereich an das Schaftteil direkt angrenzt.

Die EP 1 248 022 A2 offenbart eine Kolbenringanordnung für Kolben von Hubkolbenmaschinen, insbesondere Brennkraftmaschinen, umfassend einen in einer Nut des Kolbens angeordneten Ölabstreifring, der von einem auf den Ringinnenumfang radial nach außen wirkenden Federelement beaufschlagt ist, und dem ferner eine das abgestreifte Öl aufnehmende Ausnehmung im Kolben zugeordnet ist, wobei der Ölabstreifring ein gegen Verschleiß geschützt ausgebildeter Leichtmetallring ist, der ein Höhen/Breiten-Verhältnis von H/B größer oder gleich 1 aufweist.

Der Erfindung liegt daher die Aufgabe zugrunde, einen gattungsgemäßen Kolben dahingehend zu verbessern, dass die eingangs geschilderten Nachteile vermieden werden.

Diese Aufgabe ist durch die Merkmale des Patentanspruches 1 gelöst.

Erfindungsgemäß ist vorgesehen, dass nach wie vor im Bereich zwischen der Oberkante des Schaftteiles und der Ringnut, insbesondere der Unterkante der untersten Ringnut, eine umlaufende radiale Vertiefung angeordnet ist, wobei der obere Durchmesser, also im Bereich der Unterkante der untersten Ringnut, der Vertiefung kleiner ist als der untere Durchmesser, also im Bereich der Oberkante des Schaftteiles, der Vertiefung. Aufgrund dieser Geometrie werden mehrere Vorteile erzielt. Zum Einen kommt es zu einer Verbesserung (Vergrößerung) der Auflagefläche des Ölabstreifringes in der unteren Ringnut, wobei andererseits gleichzeitig die tragende Schaftänge erhöht wird und es zu einer Optimierung der Form (Optimierung des Querschnittes) für das abzuführende beziehungsweise aufzunehmende Ölvolumen im Bereich der Oberkante des Schaftteiles kommt. Diese geometrische Ausführung der Vertiefung hat weiterhin den Vorteil, dass Ölabstreifringe mit geringer radialer Breite verwendet werden können, da bei solchen Ölabstreifringen die Ringunterflanke eine optimierte, d.h. ausreichend große Auflagefläche benötigt. Würde bei den bisher bekannten Geometrien (Fase bzw. Rezess) die obere Berandung (also der Durchmesser des 4. Ringsteges) vergrößert werden, würde dies bei konstantem Ölvolumen zwangsweise zu einer axial hohen Fase (Rezess) führen. Dies würde Kompromisse bei der Gestaltung des Kolbenschaftprofiles fordern und vor allen Dingen die Belastbarkeit des Kolbens und sein Geräuschverhalten nachteilig beeinflussen, d.h. verschlechtern. Diese Nachteile beseitigt die Erfindung in vorteilhafter Weise, da nunmehr für den Ölsabstreifring, insbesondere für einen solchen mit einer geringen radialen Breite, die Ringunterflanke eine optimierte Auflagefläche findet, ohne dass bei gleichzeitig konstantem Ölvolumen der Schaftteil des Kolbens geschwächt wird. Dadurch stellen sich ein geringerer Ölverbrauch und ein optimiertes Geräuschverhalten während des Betriebes des Kolbens in der Brennkraftmaschine ein. Weiterhin ist von besonderem Vorteil, dass die Erfindung die Verwendung von besonders formelastischen Ölabstreifringen, insbesondere in dreiteiligen Ausführungen, auch in geometrisch grenzwertig ausgelegten Kurbeltrieben mit kurzen Kolben (d.h. kleine Kompressionshöhe) ermöglicht. Ebenso wird der bekannte Nachteil beseitigt, dass es zu Schwierigkeiten bei der Montage des Ölabstreifringes bei radial schmalen Stahlbandringen kommen kann. Denn bei den bisherigen Geometrien der Vertiefung kann es aufgrund des geringen Durchmessers des vierten Ringsteges passieren, dass der Stahlbandring die Ringnut axial verlässt, d.h. abspringt und somit zu Schäden an der Brennkraftmaschine kommen kann.

In Weiterbildung der Erfindung weist die Vertiefung einen etwa V-förmigen Querschnitt auf. Dadurch wird für das anzusammelnde beziehungsweise abzuführende Volumen für das Motoröl ein ausreichend großer Raum geschaffen, wobei die axiale Höhe der Vertiefung minimiert wird und die obere Berandung den größtmöglichen Durchmesser erhält, so dass eine ausreichend große Auflagefläche für den Ölabstreifring zur Verfügung steht, ohne dass die tragende Schaftlänge reduziert wird, die zu einer Schwächung des Kolbens führen würde.

In Weiterbildung der Erfindung ist der Verlauf der Vertiefung von der Unterkante der Ringnut bis etwa in die Mitte der Vertiefung flacher als der Verlauf der Vertiefung von der Mitte bis in Richtung der Oberkante des Schaftteiles. Dadurch wird der Bereich zwischen der Unterkante der Ringnut und der Oberkante der Vertiefung so ausgebildet, dass einerseits die notwendige Auflagefläche für den Ölabstreifring in der unteren Ringnut zur Verfügung steht und andererseits bei ausreichendem Ölvolumen die erforderliche Festigkeit (Tragkraft für den Ölabstreifring) realisiert ist. Demgegenüber ist der Verlauf der Vertiefung von deren Mitte bis in Richtung der Oberkante des Schaftteiles steiler, so dass dadurch das abgestreifte Öl besser gesammelt und abgeführt werden kann.

Verschiedene Ausführungsbeispiele der Erfindung, auf die diese jedoch nicht beschränkt ist, sind in den Figuren gezeigt.

Es zeigen:
- Figur 1:: Schnitt durch einen dreidimensional dargestellten Kolben,
- Figur 2:: Schnittdarstellung eines Kolbens gemäß Figur 1,
- Figuren 3 bis 10:: Detailansichten von verschiedenen Ausführungsformen der Vertiefung im Übergangsbereich vom Kolbenoberteil zum Kolbenunterteil.

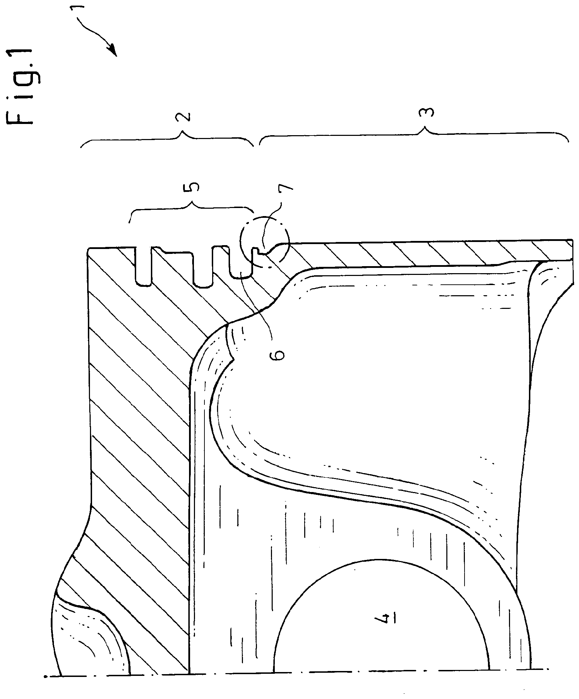

In Figur 1 bezeichnet die Bezugsziffer 1 einen teilweise dargestellten Kolben im Schnitt, der als fertiger einteiliger Kolben ausgebildet ist, wobei die Erfindung auch bei mehrteiligen Kolben, insbesondere Pendelschaftkolben, anwendbar ist.

Der Kolben 1 weist ein Kolbenoberteil 2 und ein daran angrenzendes Schaftteil 3 auf, wobei im Bereich des Schaftteiles 3 in an sich bekannter Weise eine Bolzenbohrung 4 zur Aufnahme eines nicht dargestellten Kolbenbolzens vorhanden ist. Sonstige Konstruktionsmerkmale des Kolbens 1 sind zwar in üblicher Weise vorhanden, auf diese wird aber nicht weiter eingegangen, um die Darstellung der Erfindung zu vereinfachen.

Das Kolbenoberteil 2 weist in ebenso bekannter Weise ein Ringfeld 5 auf, wobei hier drei Ringnuten vorhanden sind, von denen die unterste Ringnut mit der Bezugsziffer 6 versehen ist. Unterhalb der untersten Ringnut 6, d.h. im Bereich des Überganges von dem Kolbenoberteil 2 in das Schaftteil 3, ist eine umlaufende radiale Vertiefung 7 angeordnet, die die erfindungsgemäße Besonderheit aufweist, dass der obere Durchmesser, d.h. die obere Kante der Vertiefung 7, kleiner ist als der untere Durchmesser, d.h. im Bereich des Schaftteiles 3, der Vertiefung ist. In der Vertiefung 7 kann also nicht nur das von dem Ölabstreifring in der Ringnut 6 angesammelte Öl aufgenommen werden, sondern die axiale Höhe der Vertiefung 7 ist minimiert und der obere Rand der Vertiefung 7 bietet den größtmöglichen Durchmesser für die notwendige Auflagefläche des in der Ringnut 6 angeordneten, aber nicht dargestellten Ölabstreifringes, ohne die tragende Schaftlänge zu reduzieren.

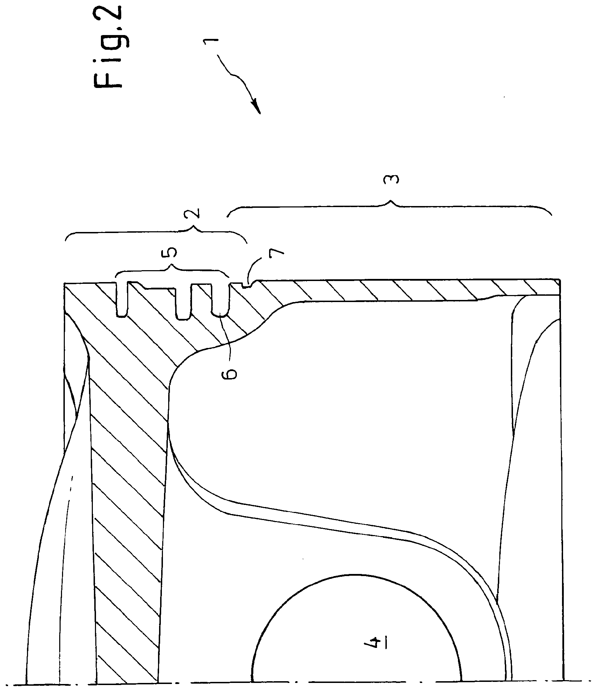

Figur 2 zeigt zur Verdeutlichung noch eine Schnittdarstellung eines Kolbens gemäß Figur 1.

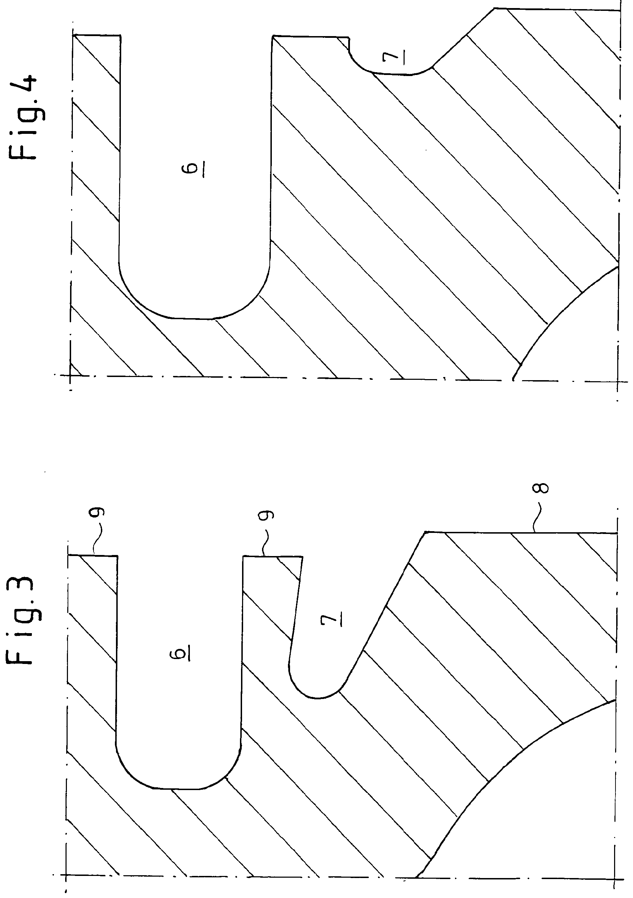

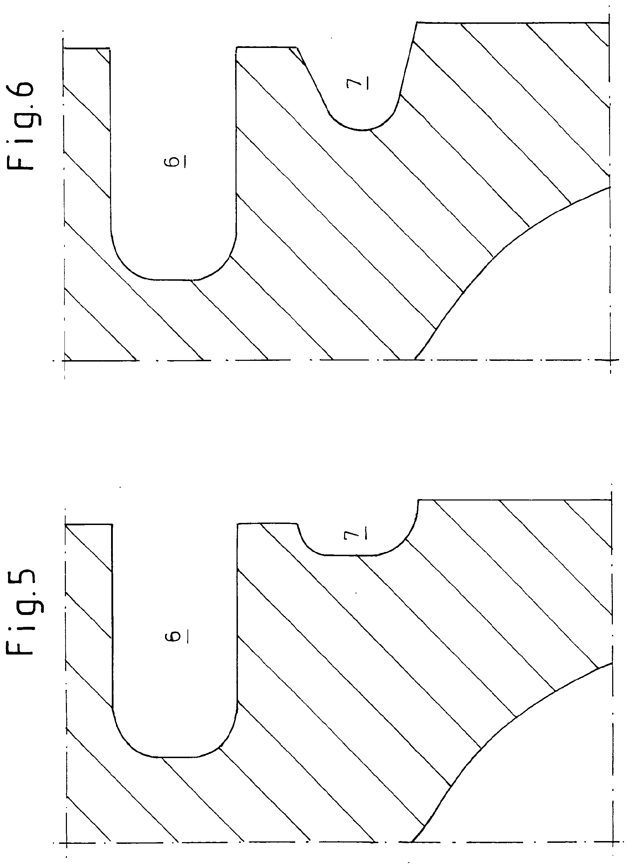

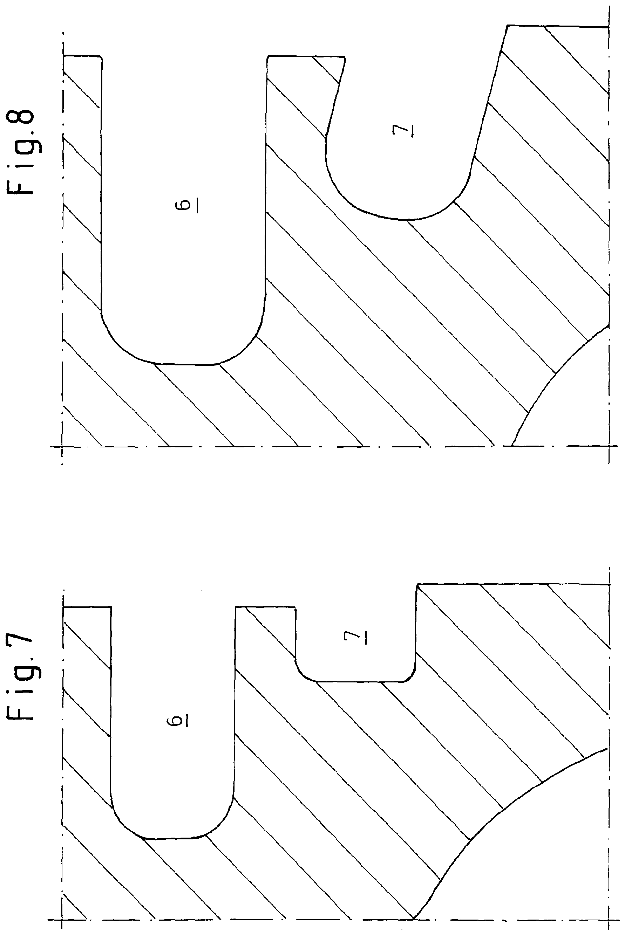

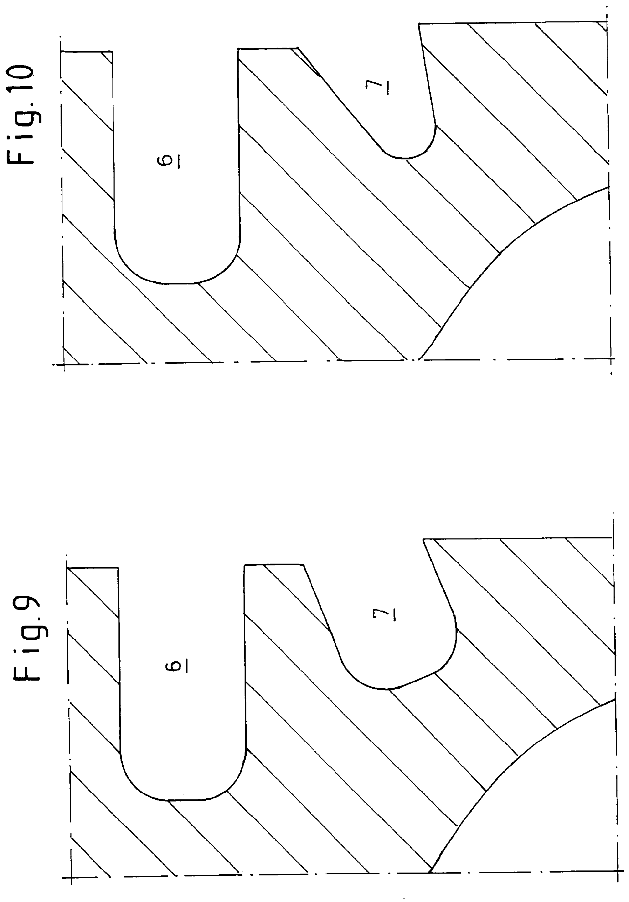

Die Figuren 3 bis 10 zeigen Detailansichten von verschiedenen Ausführungsformen der Vertiefung 7 im Übergangsbereich vom Kolbenoberteil 2 zum Kolbenunterteil 3. Dabei ist erkennbar, dass verschiedene geometrische Formen zur Anwendung kommen können, um die Auflagefläche des Ölabstreifringes insgesamt zu vergrössern, ohne die Festigkeit und die Belastbarkeit des Kolbens zu beeinträchtigen. In Figur 3 ist, stellvertretend für die anderen Figuren, noch gezeigt, dass der Durchmesser im Bereich des Kolbenunterteiles 3, genauer im Bereich einer Schaftand 8, größer ist als der Durchmesser im Bereich des Ringfeldes 5, genauer der Ringwände 9. Bei den nach unten gerichteten Vertiefungen 7, wie sie in den Figuren 9 und 10 dargestellt sind, kann sich Öl ansammeln, dass zur Schmierung beiträgt. Ein ähnlicher oder sogar nahezu gleicher Effekt stellt sich aber auch bei den Vertiefungen 7, wie sie in den übrigen Figuren gezeigt sind, aufgrund der Auf- und Abbewegung des Kolbens im Betrieb ein.

### Bezugszeichenliste:

- 1.: Kolben
- 2.: Kolbenoberteil
- 3.: Schaftteil
- 4.: Bolzenbohrung
- 5.: Ringfeld
- 6.: Ringnut
- 7.: Vertiefung
- 8.: Schaftwand
- 9.: Ringwand

## Patentansprüche

1. Kolben (1) mit einem Kolbenoberteil (2) und einem daran angrenzenden Schaftteil (3), wobei das Kolbenoberteil (2) ein drei Ringnuten aufweisendes Ringfeld (5) mit einer untersten Ringnut (6), in der ein Ölabstreifring angeordnet ist, aufweist, **dadurch gekennzeichnet, dass** im Bereich zwischen der Oberkante des Schaftteiles (3) und einer unterhalb der untersten Ringnut (6) angeordneten Rinqwand (9) eine umlaufende radiale Vertiefung (7) angeordnet ist, wobei der obere Durchmesser der Vertiefung (7) im Bereich der Unterkante der Ringwand (9) unterhalb der untersten Ringnut (6) kleiner ist als der untere Durchmesser der Vertiefung (7) im Bereich der Oberkante des Schafteils (3), und dass in dem Bereich des Übergangs von dem Kolbenoberteil (2) in das Schaftteil (3) das Kolbenoberteil (2) in einem Bereich an das Schaftteil (3) direkt angrenzt, wobei der Ölabstreifring in der untersten Ringnut (6) formelastisch, insbesondere dreiteilig ausgeführt ist.

2. Kolben (1) nach Anspruch 1, **dadurch gekennzeichnet, dass** die Vertiefung (7) einen etwa V-förmigen Querschnitt aufweist.

3. Kolben (1) nach Anspruch 1 oder 2, **dadurch gekennzeichnet, dass** der Verlauf der Vertiefung (7) von der Unterkante der Ringnut (6) bis etwa in die Mitte der Vertiefung (7) flacher ist als der Verlauf der Vertiefung (7) von deren Mitte bis in Richtung der Oberkante des Schaftteiles (3).

4. Kolben (1) nach einem der vorhergehenden Ansprüche, **dadurch gekennzeichnet, dass** die Vertiefung (7) mit dem Gießen eines Kolbenrohlings eingebracht und nach dem Gießen des Kolbenrohlings durch Feinbearbeitung in die entsprechende Form bringbar ist.

5. Kolben (1) nach einem der vorhergehenden Ansprüche, **dadurch gekennzeichnet, dass** ein Kolbenrohling gießbar ist, wobei der Kolbenrohling zunächst keine Vertiefung (7) aufweist und die Vertiefung (7) durch Nachbearbeitung in ihre entsprechende Form bringbar ist.

## Claims

1. Piston (1) having a piston upper part (2) and a skirt part (3) which adjoins the latter, the piston upper part (2) having an annular field (5) which has three annular grooves, with a lowermost annular groove (6) in which an oil scraper ring is arranged, **characterized in that** a circumferential radial recess (7) is arranged in the region between the upper edge of the skirt part (3) and an annular wall (9) arranged below the lowermost annular grove (6), the upper diameter of the recess (7) in the region of the lower edge of the annular wall (9) below the lowermost annular grove (8) being smaller than the lower diameter of the recess (7) in the region of the upper edge of the skirt part (3), and **in that** the piston upper part (2), in a region, adjoins the skirt part (3) directly in the region of the transistion from the piston upper part (2) into the skirt part (3), the oil scraper ring being elastic in shape, in particular embodied in three parts, in the lowermost annular groove (6).

2. Piston (1) according to Claim 1, **characterized in that** the recess (7) has an approximately V-shaped cross section.

3. Piston (1) according to Claim 1 or 2, **characterized in that** the profile of the recess (7) from the lower edge of the annular groove (6) as far as approximately into the center of the recess (7) is flatter than the profile of the recess (7) from its center as far as in the direction of the upper edge of the skirt part (3).

4. Piston (1) according to one of the preceding claims, **characterized in that** the recess (7) is made during the casting of a piston blank and can be adapted into the corresponding shape after the casting of the piston blank by precision machining.

5. Piston (1) according to one of the preceding claims, **characterized in that** a piston blank can be cast, the piston blank first of all not having any recess (7) and it being possible for the recess (7) to be adapted into its corresponding shape by postmachining.

## Revendications

1. Piston (1) présentant une à laquelle se raccorde une partie (3) en tige, la partie supérieure (2) de piston présentant un champ annulaire (5) doté de trois rainures annulaires dont une rainure annulaire inférieure (6) dans laquelle est disposé un anneau de raclage d'huile,
**caractérisé en ce que**
au niveau situé entre le bord supérieur de la partie (3) en tige et une paroi annulaire (9) disposée en dessous de la rainure annulaire inférieure (6) est disposé un creux radial périphérique (7),
**en ce que** le diamètre supérieur du creux (7) au niveau du bord inférieur de la paroi annulaire (9) en dessous de la rainure inférieure (6) est plus petit que le diamètre inférieur du creux (7) au niveau du bord supérieur de la partie en tige (3),
**en ce qu'**au niveau de la transition entre la partie supérieure (2) du piston et la partie (3) en tige, la partie supérieure (2) du piston est directement adjacente à la partie en tige (3) sur une partie et
**en ce que** l'anneau de raclage d'huile prévu dans la rainure annulaire inférieure (6) a une forme élastique et est en particulier réalisé en trois parties.

2. Piston (1) selon la revendication 1, **caractérisé en ce que** le creux (7) présente une section transversale sensiblement en forme de V.

3. Piston (1) selon les revendications 1 ou 2, **caractérisé en ce que** l'extension du creux (7) depuis le bord inférieur de la rainure annulaire (6) jusque sensiblement au milieu du creux (7) est plus aplati que l'extension du creux (7) depuis son milieu jusqu'en direction du bord supérieur de la partie (3) en tige.

4. Piston (1) selon l'une des revendications précédentes, **caractérisé en ce que** le creux (7) est ménagé lors de la coulée d'une ébauche de piston et peut être amené dans la forme appropriée par usinage fin après la coulée de l'ébauche de piston.

5. Piston (1) selon l'une des revendications précédentes, **caractérisé en ce qu'**une ébauche de piston peut être coulée, l'ébauche de piston présentant d'abord un creux (7), le creux (7) pouvant être amené dans sa forme appropriée par usinage final.
